# EUROPEAN PATENT APPLICATION

(11) **EP 4 317 488 A1**
(43) Date of publication of application: **07.02.2024**
(21) Application number: 22795622.4
(22) Date of filing: 18.04.2022
(51) Int. Cl.: C22B 11/00, C22B 3/18, C22B 3/24

(54) **METHOD FOR RECOVERING METAL**

(30) Priority: 27.04.2021 JP 2021074760
(71) Applicant: Galdieria Co., Ltd., Tokyo 103-0007 (JP)
(72) Inventor: ADAMS, Eri, Tokyo 103-0007 (JP); MAEDA, Kazuki, Tokyo 103-0007 (JP); TOKORO, Chiharu, Tokyo 169-8050 (JP); KATO, Tatsuya, Nagoya-shi, Aichi 466-8555 (JP)
(74) Representative: Gilani, Anwar
(86) International application number: PCT/JP2022/018052
(87) International publication number: WO 2022/230709

(57) **Abstract**

The present invention relates to a method for recovering at least one kind of metal selected from the group consisting of gold (Au) and palladium (Pd), the method including: an addition process of adding a metal adsorbent to a solution containing the metal; and an adsorption process of causing the metal to be adsorbed on the metal adsorbent, wherein the metal adsorbent comprises at least one selected from the group consisting of a cell and a cell-derived article of microorganism belonging to Cyanidiales, a processed article of the cell and the cell-derived article, and an artificial substance mitigating the cell, the cell-derived article, and the processed article, and wherein the solution is a nitric acid solution or a sulfuric acid solution.

## Description

### Technical Field

The present invention relates to a method for recovering a metal. More specifically, the invention relates to a method for recovering gold (Au) and palladium (Pd) in a more efficient manner.

### Background Art

Noble metals such as gold and palladium are indispensable for manufacturing various electronic products, automobile catalysts, and the like. The production volume of electronic products, automobile catalysts, and the like continues to increase, but the production volume of the noble metals is limited. In order to stably manufacture electronic products, automobile catalysts, and the like in the future, it is important to recover noble metals from metal waste liquid and the like obtained from discarded products and to recycle the noble metals.

As a method for recovering metals by using microorganisms, for example, Patent Literature 1 discloses a method for recovering a metal or a metal compound. The method includes an addition process of adding a dried article of cells of red algae of Cyanidiales, a dried article of cell-derived article of red algae of Cyanidiales, or an artificial substance imitating the dried article of the cells or the dried article of the cell-derived article of Cyanidiales into a metal solution, and an adsorption process of causing a metal or a metal compound contained in the metal solution to be adsorbed on cells derived from the dried article, a cell-derived article derived from the dried article, or the artificial substance.

### Citation List

### Patent Literature

Patent Literature 1: International Publication WO 2018/155687

### Summary of Invention

### Technical Problem

The red algae of Cyanidiales disclosed in Patent Literature 1 can selectively recover a noble metal from an acid solution containing hydrochloric acid (HCl) or aqua regia.

In the course of research for clarifying an adsorption mechanism of noble metals by red algae of Cyanidiales, the present inventors have found that the adsorption mechanism of gold and palladium is different depending on a solvent of a solution containing a metal, and adsorption efficiency of gold and palladium in a solution containing nitric acid (HNO₃) or sulfuric acid (H₂SO₄) is particularly excellent.

The invention is based on the new finding, and an object thereof is to provide a method for recovering a metal in which recovery efficiency of gold and palladium is improved in comparison to the related art.

### Solution to Problem

The invention relates to a method for recovering at least one kind of metal selected from the group consisting of gold (Au) and palladium (Pd), the method comprising: an addition process of adding a metal adsorbent to a solution containing the metal; and an adsorption process of causing the metal to be adsorbed on the metal adsorbent, wherein the metal adsorbent comprises at least one selected from the group consisting of a cell and a cell-derived article of microorganism belonging to Cyanidiales, a processed article of the cell and the cell-derived article, and an artificial substance mitigating the cell, the cell-derived article, and the processed article, and wherein the solution is a nitric acid solution or a sulfuric acid solution.

According to the method for recovering a metal according to the invention, in a method for recovering a metal by using a metal adsorbent containing cell and the like of microorganism belonging to Cyanidiales, since the solution (solution containing at least one kind selected from gold and palladium) to which the metal adsorbent is added is a nitric acid solution or a sulfuric acid solution, gold and palladium can be recovered with higher efficiency in comparison to the related art.

In the method, the processed articles may be a dried article, a pulverized article, and a dried powder of the cell and the cell-derived article of microorganism belonging to Cyanidiales.

### Advantageous Effects of Invention

According to the invention, it is possible to provide a method of recovering a metal in which recovery efficiency of gold and palladium is improved in comparison to the related art.

### Brief Description of Drawings

FIG. 1 is a view showing results obtained by analyzing an adsorption ratio (% adsorption) of Au and Pd to a metal adsorbent (a dried powder of *G*. *sulphuraria*).
FIG. 2 is a view showing results of transmission electron microscope analysis.
FIG. 3 is a view showing results of X-ray absorption fine structure (XAFS) analysis.
FIG. 4 is a view showing results of X-ray photoelectron spectroscopy (XPS) analysis.
FIG. 5 is a view showing results of X-ray photoelectron spectroscopy (XPS) analysis.
FIG. 6 is a schematic view showing an adsorption mechanism of Au and Pd to a metal adsorbent (a dried powder of *G. sulphuraria).*

### Description of Embodiments

Hereinafter, an embodiment for carrying out the invention will be described in detail. However, the invention is not limited to the following embodiment.

A method for recovering a metal according to this embodiment relates to a method for recovering at least one kind of metal selected from the group consisting of gold and palladium. The recovery method according to this embodiment includes an addition process of adding a metal adsorbent to a solution containing the metal, and an adsorption process of causing the metal to be adsorbed on the metal adsorbent. The metal adsorbent contains at least one selected from the group consisting of a cell and a cell-derived article of microorganism belonging to Cyanidiales, a processed article of the cell and the cell-derived article, and an artificial substance mitigating the cell, the cell-derived article, and the processed article, and the solution is a nitric acid solution or a sulfuric acid solution.

### (Solution Containing Metal)

In the recovery method according to this embodiment, the solution containing a metal (hereinafter, simply referred to as "solution") contains any one or both of gold and palladium. The solution may contain metals other than gold and palladium. Examples of the metals other than gold and palladium include noble metals such as platinum, ruthenium, rhodium, osmium, and iridium, and base metals such as copper and iron. Gold or palladium may be contained in the solution in a form of metal salt, a metal ion, or a metal complex.

The solution is a nitric acid solution or a sulfuric acid solution. In these solutions, since adsorption efficiency of gold and palladium by the metal adsorbent is excellent, recovery efficiency of gold and palladium can be improved.

The nitric acid solution is an aqueous solution containing nitric acid. A concentration of the nitric acid in the nitric acid solution is not particularly limited, but the concentration may be, for example, 0.1 M (mol/L) or more, 0.2 M or more, 0.3 M or more, 0.4 M or more, or 0.5 M or more. An upper limit of the concentration of the nitric acid in the nitric acid solution is also not particularly limited, but the upper limit may be, for example, 6 M or less, 5 M or less, 4 M or less, 3 M or less, 2.5 M or less, 2 M or less, or 1.5 M or less.

The sulfuric acid solution may be an aqueous solution containing sulfuric acid. A concentration of the sulfuric acid in the sulfuric acid solution is not particularly limited, but the concentration may be, for example, 0.1 M (mol/L) or more, 0.2 M or more, 0.3 M or more, 0.4 M or more, or 0.5 M or more. An upper limit of the concentration of the sulfuric acid in the sulfuric acid solution is also not particularly limited, but the upper limit may be, for example, 6 M or less, 5 M or less, 4 M or less, 3 M or less, 2.5 M or less, 2 M or less, or 1.5 M or less.

A concentration of gold in the solution containing a metal is not particularly limited, but the concentration may be, for example, 0.001 g/L or more, 0.005 g/L or more, 0.01 g/L or more, or 0.05 g/L or more. An upper limit of the concentration of gold in the solution containing a metal is also not limited, but the upper limit may be, for example, 10 g/L or less, 7.5 g/L or less, 5 g/L or less, or 2.5 g/L or less.

A concentration of palladium in the solution containing a metal is not particularly limited, but the concentration may be, for example, 0.001 g/L or more, 0.005 g/L or more, 0.01 g/L or more, or 0.05 g/L or more. An upper limit of the concentration of palladium in the solution containing a metal is also not particularly limited, but the upper limit may be, for example, 10 g/L or less, 7.5 g/L or less, 5 g/L or less, or 2.5 g/L or less.

### (Metal Adsorbent)

The metal adsorbent according to this embodiment contains at least one selected from the group consisting of a cell and a cell-derived article of microorganism belonging to Cyanidiales, a processed article of the cell and the cell-derived article, and an artificial substance mitigating the cell, the cell-derived article, and the processed article.

Examples of the microorganism belonging to Cyanidiales include microorganism belonging to Galdieria, Cyanidium, and Cyanidioschyzon. The microorganism belonging to Cyanidiales has a characteristic in that a cell surface layer is positively charged, and thus gold and palladium can be selectively adsorbed and recovered in the metal solution. Among the microorganism belonging to Cyanidiales, from the viewpoint that adsorption efficiency of gold and palladium is higher, microorganism belonging to Galdieria are preferable, and *Galdieria sulphuraria* is more preferable. The present inventors surmised that the reason why the adsorption efficiency of *G. sulphuraria* is higher is because availability of nitrogen atoms (N), which are initial adsorption sites for gold and palladium, is high, and reducibility of gold is high in addition to the positive charging of the cell surface layer.

A cell of the microorganism belonging to Cyanidiales may be a living cell (a cell that can proliferate) or a dead cell (a cell that cannot proliferate).

In addition, the microorganism belonging to Cyanidiales may be a recombinant microorganism that has been genetically modified by a genetic recombination technology as long as the above-described characteristics are not lost.

The cell-derived article of the microorganism belonging to Cyanidiales represent a part of the cell of the microorganism belonging to Cyanidiales. As described above, since in the cell surface layer, the microorganism belonging to Cyanidiales can selectively adsorb and recover gold and palladium in the metal solution, the cell-derived article may be a cell surface layer-derived article (for example, cell wall or cell membrane).

The processed article of the cell or the cell-derived article of the microorganism belonging to Cyanidiales represents an article obtained by physically or chemically processing a part or the entirety of the cell of the microorganism belonging to Cyanidiales. Specific examples of the processed article include a dried article, a pulverized article, and a dried powder of the cell or the cell-derived article of the microorganism belonging to Cyanidiales, and a modified article of which a surface state is modified by bringing the cell or the cell-derived article of the microorganism belonging to Cyanidiales into contact with acid.

The dried article can be obtained by performing a drying treatment on the cell or the cell-derived article of the microorganism belonging to Cyanidiales. As a drying treatment method, for example, known methods such as a spray drying treatment, a freeze drying treatment, a high-temperature drying treatment, and a reduced-pressure drying treatment can be used without particular limitation.

The pulverized article can be obtained by performing a pulverization treatment on the cell or the cell-derived article of the microorganism belonging to Cyanidiales. As a pulverization treatment method, for example, a known method such as a ball mill treatment can be used without particular limitation.

The dried powder can be obtained by performing a powdering treatment after performing the drying treatment on the cell or the cell-derived article of the microorganism belonging to Cyanidiales. As a powdering treatment method, for example, a method of performing the pulverization treatment on the dried article can be used.

The modified article can be obtained by bringing the cell or the cell-derived article of the microorganism belonging to Cyanidiales into contact with an acid to modify a surface state. The acid to be contacted may be a strong acid or a weak acid. The kind of the acid is not particularly limited, any acid may be used, and the acid may be, for example, sulfuric acid, nitric acid, hydrochloric acid, or the like. Due to contact with the acid, the surface state of the cell or the cell-derived article of the microorganism belonging to Cyanidiales becomes optimized for adsorption of gold and palladium, and according to this, an improvement in adsorption efficiency is expected.

Examples of the artificial substance mitigating the cell and the cell-derived article of the microorganism belonging to Cyanidiales, and the processed article of the cell and the cell-derived article include an artificial substance prepared by organic synthesis, 3D printing, and the like by mitigating the cell, the cell-derived article, and the processed article of the cell and the cell-derived article, and the like.

With regard to the metal adsorbent according to this embodiment, one kind may be used alone or two or more kinds may be used in combination.

### (Addition Process)

The addition process is a process of adding the metal adsorbent to the solution containing a metal. An addition amount of the metal adsorbent is not particularly limited, but the addition amount can be appropriately adjusted in correspondence with the amount of the solution containing a metal, the concentration of nitric acid or sulfuric acid, or the kind or concentration of a metal to be recovered. As a specific example of the addition amount of the metal adsorbent, for example, with respect to 1 mL of solution in which a concentration of a metal to be recovered is 1 g/L, the addition amount may be 1 mg or more, 5 mg or more, 10 mg or more, or 15 mg or more. In addition, the concentration may be, for example, 100 mg or less, 75 mg or less, or 50 mg or less.

### (Adsorption Process)

The adsorption process is a process of causing a metal (gold or palladium) to be adsorbed on the metal adsorbent. For example, the adsorption process can be performed by stirring the metal-containing solution to which the metal adsorbent is added for a predetermined time. The time for which the adsorption process is performed can be appropriately adjusted in correspondence with the kind of the solution, and the kind and concentration of a metal to be recovered. However, since gold and palladium can be sufficiently adsorbed on the metal adsorbent, for example, by stirring the metal-containing solution to which the metal adsorbent is added until the solution becomes homogeneous, for example, the time may be one second or longer, one minute or longer, two minutes or longer, or three minutes or longer. In addition, the upper limit of the time may be, for example, 24 hours or shorter without a particular limitation. A temperature when performing the adsorption process can be appropriately adjusted in correspondence with the kind of the solution, and the kind and concentration of a metal to be recovered, but the temperature may be, for example, 0°C or higher, 4°C or higher, or 15°C or higher. In addition, the temperature may be, for example, 100°C or lower, 80°C or lower, 60°C or lower, or 40°C or lower.

The recovery method according to this embodiment may further include a purification process of purifying a metal (gold or palladium) adsorbed on the metal adsorbent after the adsorption process. The method of purifying the metal adsorbed on the metal adsorbent is not particularly limited, but examples thereof include a method of combusting the recovered metal adsorbent to obtain a metal as a residue, a method of dissolving cells and the like contained in a recovered metal recovery agent to elute a metal, a method of eluting a metal or the like by using a predetermined metal elution solution such as an acidic thiourea solution, a mixed solution containing ammonia and an ammonium salt, an acid solution (for example, a hydrochloric acid solution and an aqua regia), an alkali solution (for example, a KOH solution), and a metal chelate solution (for example, EDTA solution), and the like. Among the methods, from the viewpoint of increasing purification efficiency, the method of eluting a metal and the like by using the acidic thiourea solution or the mixed solution containing ammonia and an ammonium salt as the metal elution solution is preferable. In addition, from the viewpoint of increasing the purification efficiency while reducing the cost and environmental burden, the method of eluting a metal and the like by using the mixed solution containing ammonia and an ammonium salt as the metal elution solution is preferable.

### Examples

Hereinafter, the invention will be described in more detail on the basis of examples. However, the invention is not limited by the following examples.

### [Example: Gold and Palladium Recovery Test]

### <Method>

### [Method of Preparing Metal Adsorbent]

*G. sulphuraria* was proliferated by heterotrophic growth at a culture temperature of 42°C with constant aeration. With regard to a culture medium that was used, 2 mL/L of trace element solution (containing 5.4 g of MnCl₂·4H₂O, 315 mg of ZnCl₂, 1.17 g of Na₂MoO₄·2H₂O, 120 mg of Co_{C}l₂·6H₂O, and 129 mg of CuCl₂·2H₂O in 1 L) was supplemented to a culture medium containing 280 mg of CaCl₂·2H₂O, 540 mg of KH₂PO₄, 500 mg of MgSO₄·7H₂O, 8 mg of FeSO₄·7H₂O, and 2.62 g of (NH₄)₂SO₄ in 1 L, 50 mM sucrose was supplemented to the culture medium as a carbon source, and pH was adjusted to 2.5 with concentrated sulfuric acid. Cells reached a stationary phase (OD₇₅₀ is approximately 20) were recovered, repeatedly washed until reaching near neutral pH, and were dried in an oven kept to 80°C. Dried cells were pulverized with a mortar and a pestle to obtain a dried powder of *G. sulphuraria* (metal adsorbent).

### [Gold and Palladium Recovery Test Method]

Metal adsorbent was added to a gold solution or a palladium solution at a dose of 20 mg/mL, and an adsorption reaction was performed by aggressively vortexing the resultant solution to obtain a homogeneous suspension. Next, centrifugation (10000 × g, for three minutes, at room temperature) was promptly performed. After centrifugation, an obtained supernatant was used for quantification of gold or palladium.

In addition, obtained pellets were freeze-dried under conditions of 13.4 Pa and -48°C by using a freeze drier (FDU-1200, manufactured by TOKYO RIKAKIKAI CO., LTD.), and were pulverized with a mortar and a pestle to be used for additional analysis.

The aqua regia was prepared by mixing 36% (w/v) HCl and 61% (w/v) HNO₃ in a molar ratio of 3 : 1, and by diluting the resultant mixture three times with distilled water (4 M).

### [Method of Measuring Adsorption Ratio of Gold and Palladium]

Concentrations of gold and palladium in a solution were quantified by using an inductively coupled plasma optical emission spectrometer (ICP-OES) (Agilent 5100, manufactured by Agilent Technologies Japan, Ltd.) equipped with an echelle polychromator and a charge coupled device (CCD) detector. The concentrations of gold and palladium in the solution were calculated from respective standard curves thereof.

The adsorption ratios (%) of gold and palladium were calculated by dividing a difference between a concentration of gold or a concentration of palladium in a gold solution or a palladium solution before adding the metal adsorbent (initial concentration), and a concentration of gold or a concentration of palladium in a supernatant after the adsorption reaction by the initial concentration. Three or four biological replicates were measured in any of analyses. A statistical difference was determined by a one-way ANOVA test with Tukey's multiple comparison post-hoc test using Prism (GraphPad Software).

### <Results>

Table 1 shows a dissolution ratio when dissolving various metal (Au or Pd) salts (HAuCl₄, Au acetate, AuCl, Pd(NO₃)₂, PdCl₂, or Pd acetate) to various solutions (1 M HCl aqueous solution, 1 M HNO₃ aqueous solution, 1 M H₂SO₄ aqueous solution, or 4 M aqua regia) to be 0.1 g/L, and results (adsorption ratio) of a recovery test using a gold solution or palladium solution that was obtained.

**[Table 1]**

| | 1 M HCl | | | 1 M HNO₃ | | | 1 M H₂SO₄ | | | 4 M aqua regia | | |
|---|---|---|---|---|---|---|---|---|---|---|---|---|
| | Dissolution ratio | Adsorption ratio | Standard error | Dissolution ratio | Adsorption ratio | Standard error | Dissolution ratio | Adsorption ratio | Standard error | Dissolution ratio | Adsorption ratio | Standard error |
| HAuCl₄ | 100% | 96.1% | 0.16 | 100% | 97.3% | 0.07 | 100% | 96.7% | 0.08 | 100% | 68.5% | 1.12 |
| Au acetate | 100% | 94.6% | 0.28 | < 1% | b.d. | - | 1% | b.d. | - | 100% | 71.1% | 2.63 |
| AuCl | 43% | 98.7% | 0.14 | 38% | 96.1% | 0.10 | 33% | 93.5% | 0.19 | 100% | 65.9% | 1.31 |
| Pd(NO₃)₂ | 100% | 90.8% | 0.39 | 100% | 94.2% | 0.06 | 100% | 90.7% | 0.31 | 100% | 78.7% | 0.42 |
| PdCl₂ | 100% | 90.6% | 0.19 | 100% | 95.1% | 0.03 | 100% | 94.1% | 0.05 | 100% | 70.3% | 0.46 |
| Pd acetate | 100% | 90.4% | 0.22 | 100% | 94.8% | 0.02 | 100% | 92.7% | 0.07 | 100% | 67.7% | 0.53 |

| | | | | | | | | | | | | |
|---|---|---|---|---|---|---|---|---|---|---|---|---|
| b.d.: below the detection limit | | | | | | | | | | | | |

HAuCl₄ (0.1 g/L) was dissolved in all acid solvents which were tested, and the adsorption ratio of Au was higher in other acids compared to aqua regia (Table 1). On the other hand, Au acetate (0.1 g/L) was not dissolved in solvents containing nitric acid and sulfuric acid (without supply of chlorine (Cl) from the solvents in any case) (Table 1). A dissolution ratio of AuCl (0.1 g/L) containing monovalent gold was low in an acid solvent other than aqua regia, but an adsorption ratio of dissolved gold was higher in other acids compared to aqua regia (Table 1).

On the other hand, all palladium salts (0.1 g/L) were dissolved in all acid solvents, and an adsorption ratio of Pd was very high (Table 1). In any case, the adsorption ratio was higher in comparison to a case where aqua regia was set as a solvent (Table 1).

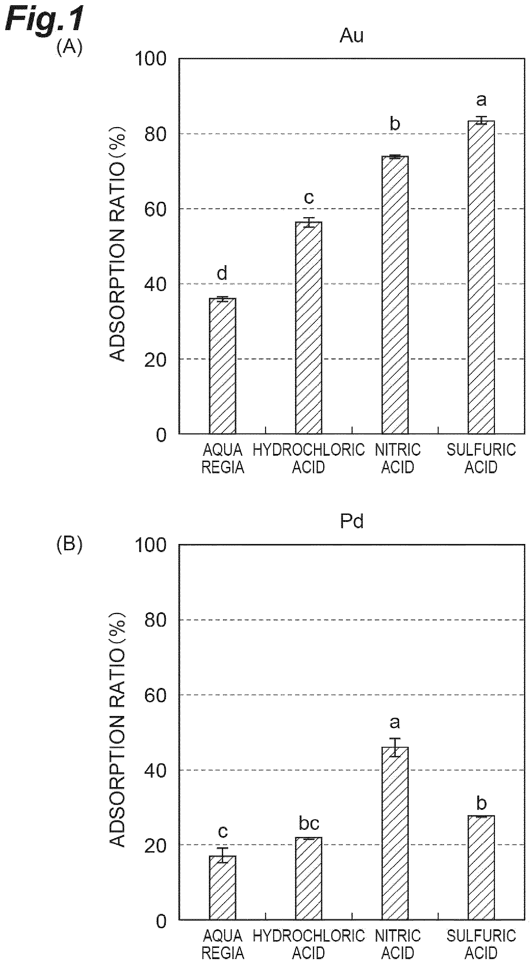

FIG. 1 is a graph showing results obtained by analyzing an adsorption ratio (% adsorption) of Au and Pd to a metal adsorbent (a dried powder of *G. sulphuraria).* FIG. 1(A) shows results of a recovery test using a gold solution in which HAuCl₄ was dissolved in various solutions (4 M aqua regia, 1 M HCl aqueous solution, 1 M HNO₃ aqueous solution, or 1 M H₂SO₄ aqueous solution) to be 1 g/L. FIG. 1(B) shows results of a recovery test using a palladium solution in which Pd(NO₃)₂ was dissolved in various solutions (4 M aqua regia, 1 M HCl aqueous solution, 1 MHNO₃ aqueous solution, or 1 M H₂SO₄ aqueous solution) to be 1 g/L. In FIG. 1, an error bar represents a standard error (n > 3), and alphabets such as a, b, and c represent a statistical difference (P < 0.01) (represent that a statistical difference is present in data between different alphabets).

From results obtained by performing additional analysis with an initial concentration set to 1 g/L, adsorption ratios of Au and Pd were different depending on the kind of an acid solvent. The adsorption ratio of Au was higher in the order of sulfuric acid, nitric acid, hydrochloric acid, and aqua regia (FIG. 1(A)). In addition, the adsorption ratio of Pd was higher in the nitric acid, and was also high in the sulfuric acid (FIG. 1(B)). The results imply that an adsorption mechanism of gold or palladium to the metal adsorbent is different depending on a solvent.

### [Reference Example: Analysis of Adsorption Mechanism of Gold and Palladium]

### <Method>

### [Transmission Electron Microscope (TEM) Analysis]

A metal adsorbent before and after the adsorption reaction was suspended in water, was placed on a copper grid, and was air-dried, TEM analysis was performed at an acceleration voltage of 200 kV by using a transmission electron microscope (JEM-2100F, manufactured by JEOL Ltd.) equipped with EDS (JED-2300T, manufactured by JEOL Ltd.).

### [X-Ray Absorption Fine Structure (XAFS) Analysis]

XAFS analysis of an Au-L₃ edge (11613.0 to 13013.0 eV) and a Pd-K edge (24058.4 to 25458.4 eV) was performed by using a BL11S2 beamline of Aichi synchrotron optical center. All spectra were acquired at room temperature. An electron accumulation ring was operated at 1.2 GeV. Continuous X-rays from synchrotron radiation were monochromated by using a silicon (111) double-crystal monochromator. All XAFS spectra of an actual sample from all standard reagents and the Au-L₃ edge were obtained in a transmission mode. XAFS spectrum of an actual sample from the Pd-K edge was obtained in a fluorescence mode using a seven-element silicon drift detector. EXAFS features were extracted from raw XAFS spectra by linear background subtraction of a leading edge and a trailing edge, and were normalized with respect to edge jump. k³-Weighted (k is a photoelectron wave number) EXAFS data was Fourier transformed by using a Hanning window function in a range of 1 to 16 Å⁻¹ and 1 to 14 Å⁻¹ with respect to the Au-L₃ edge and the Pd-K edge to obtain an FT EXAFS spectrum. Structure parameters of different coordination shells surrounding central Au and Pd atoms were obtained in a range of 1 to 4 Å by curve fitting using the k³-weighted EXAFS data and the FT EXAFS spectrum. A theoretical atom pair correlation and an amplitude function of Au(III)-N, Au-Cl, Au(I)-H, Au(0)-Au(0), Au(I)-Au(I), Au(III)-Au(III), Pd(II)-N, Pd(II)-Cl, and Pd(II)-Pd(II) were calculated by using FEFF 6.0 software, and EXAFS analysis was performed by using Athena and Artemis software.

XAFS analysis of an S-K edge (2440.0 to 2550.0 eV) and a Cl-K edge (2750.0 to 3150.0 eV) was performed by using a BL5S1 beamline of Aichi synchrotron optical center. Continuous X-rays from synchrotron radiation were monochromated by using a germanium (111) double-crystal monochromator. An XAFS spectrum of the Cl-K edge was obtained in a conversion electron yield mode. An XAFS spectrum of the S-K edge was obtained in a fluorescence mode using 7-element silicon drift detector.

### [X-Ray Photoelectron Spectroscopy (XPS) Analysis]

A metal adsorbent before and after acid infiltration or before and after the adsorption reaction was analyzed at an acceleration voltage of 10 kV by using an electron spectrometer (JPS-9010, manufactured by JEOL Ltd.) and magnesium K_{α} as an X-ray source. Reference spectrum of Pd(II) was obtained by analyzing a PdCl₂ powder in a similar manner.

### [Spectrometry of Au Nano Particles]

1 mL of AuCl (50 mg/L) dissolved in 4 M aqua regia or 1 M H₂SO₄ aqueous solution was incubated in the presence or absence of 20 mg of metal adsorbent in a dark place at 42°C for 0 minutes, 2 hours, or 72 hours. Next, an absorption spectrum of 250 to 600 nm was obtained for each supernatant by using a UV-Vis spectrophotometer (DS-11FX+, manufactured by DeNovix Inc.).

### <Results>

### [TEM Analysis of Surface of Metal Adsorbent Adsorbing Au or Pd]

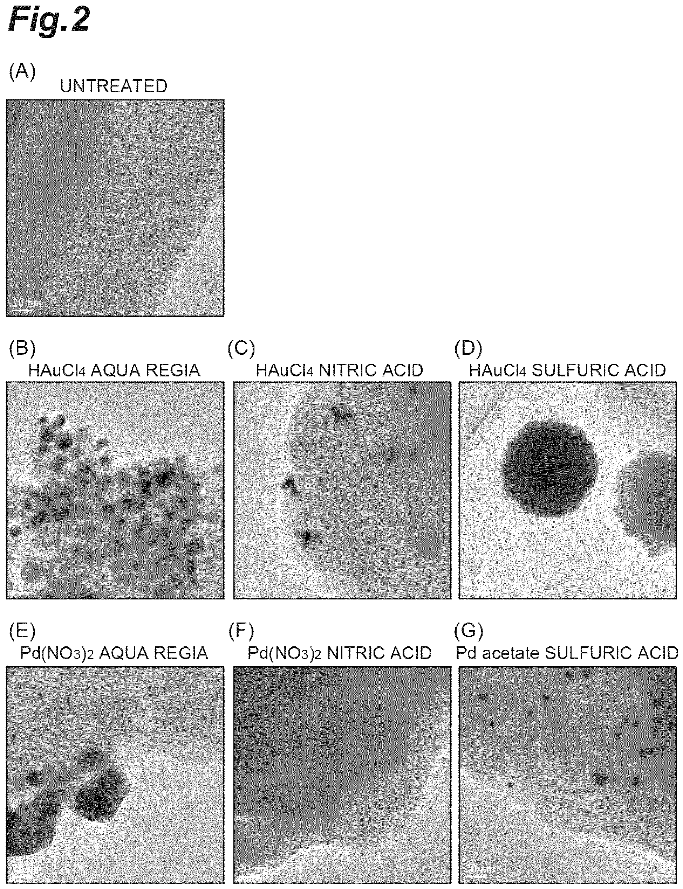

FIG. 2 is a view showing results of TEM analysis. In FIG. 2, (A) to (G) are TEM images of the following samples.
(A) An untreated metal adsorbent
(B) A metal adsorbent after metal adsorption from an acid solution obtained by dissolving an Au salt (HAuCl₄) in 4 M aqua regia to be 5 g/L
(C) A metal adsorbent after metal adsorption from an acid solution obtained by dissolving an Au salt (HAuCl₄) in 1 M nitric acid to be 5 g/L
(D) A metal adsorbent after metal adsorption from an acid solution obtained by dissolving an Au salt (HAuCl₄) in 1 M sulfuric acid to be 5 g/L
(E) A metal adsorbent after metal adsorption from an acid solution obtained by dissolving a Pd salt (Pd(NO₃)₂) in 4 M aqua regia to be 1 g/L
(F) A metal adsorbent after metal adsorption from an acid solution obtained by dissolving a Pd salt (Pd(NO₃)₂) in 1 M nitric acid to be 1 g/L
(G) A metal adsorbent after metal adsorption from an acid solution obtained by dissolving a Pd salt (Pd acetate) in 1 M sulfuric acid to be 1 g/L

From results of TEM analysis, nanoparticles (NP) were visible under all tested conditions in contrast to a surface of untreated contrast (FIG. 2). An average particle size of Au nanoparticles in H₂SO₄ was 447.6 nm (n = 21) and was particularly larger in comparison to Au nanoparticles in aqua regia (average particle size was 12.3 nm, n = 27), and HNO₃ (average particle size was 1.9 nm, n = 19). From the results of the TEM analysis, Au and Pd signals were further concentrated to sites where nanoparticles were visible in comparison to a smooth cell surface.

### [XAFS Analysis of Metal Adsorbent Adsorbing Au and Pd]

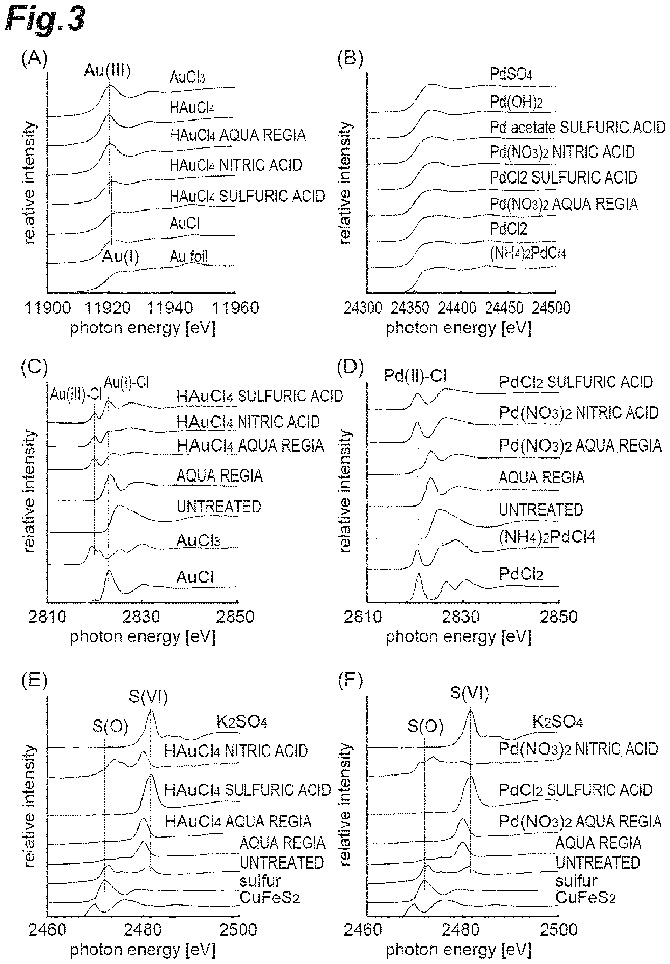

FIG. 3 is a view showing results of XAFS analysis. FIG. 3(A) shows Au-L₃ edge XANES spectra of a metal adsorbent after metal adsorption from an acid solution obtained by dissolving an Au salt (HAuCl₄) in 4 M aqua regia to be 5 g/L or from an acid solution obtained by dissolving the Au salt in 1 M nitric acid or 1 M sulfuric acid to be 1 g/L, and standard reagents. FIG. 3(B) shows Pd-K edge XANES spectra of a metal adsorbent after metal adsorption from an acid solution obtained by dissolving a Pd salt (Pd(NO₃)₂) in 4 M aqua regia or 1 M nitric acid to be 1 g/L or from an acid solution obtained by dissolving a Pd salt (Pd acetate or PdCl₂) in 1 M sulfuric acid to be 1 g/L, and standard reagents. FIG. 3(C) shows Cl-K edge XANES spectra of a metal adsorbent that was not treated or was infiltrated with 4 M aqua regia, or a metal adsorbent after metal adsorption from an acid solution obtained by dissolving an Au salt (HAuCl₄) in 4 M aqua regia to be 5 g/L or from an acid solution obtained by dissolving the Au salt in 1 M nitric acid or 1 M sulfuric acid to be 1 g/L, and standard reagents. FIG. 3(D) shows Cl-K edge XANES spectra of a metal adsorbent that was not treated or was infiltrated with 4 M aqua regia, or a metal adsorbent after metal adsorption from an acid solution obtained by dissolving a Pd salt (Pd(NO₃)₂) in 4 M aqua regia or 1 M nitric acid to be 1 g/L or from an acid solution obtained by dissolving a Pd salt (PdCl₂) in 1 M sulfuric acid to be 1 g/L, and standard reagents. FIG. 3(E) shows S-K edge XANES spectra of a metal adsorbent that was not treated or was infiltrated with 4 M aqua regia, or a metal adsorbent after metal adsorption from an acid solution obtained by dissolving an Au salt (HAuCl₄) in 4 M aqua regia to be 5 g/L or from an acid solution obtained by dissolving the Au salt in 1 M nitric acid or 1 M sulfuric acid to be 1 g/L, and standard reagents. FIG. 3(F) shows S-K edge XANES spectra of a metal adsorbent that was not treated or was infiltrated with 4 M aqua regia, or a metal adsorbent after metal adsorption from an acid solution obtained by dissolving a Pd salt (Pd(NO₃)₂) in 4 M aqua regia or 1 M nitric acid to be 1 g/L or from an acid solution obtained by dissolving a Pd salt (PdCl₂) in 1 M sulfuric acid to be 1 g/L, and standard reagents.

In the Au-L₃ edge analysis, information on a state of unoccupied 5d is obtained from a peak (also known as "white line") pertaining to 2p → 5d transition. The metal adsorbents treated with HAuCl₄ dissolved in aqua regia, HNO₃, and H₂SO₄ exhibited a "white line" position at 11920.5, 11921.2, and 11923.4 eV, respectively (FIG. 3(A)). It is considered that most of Au in aqua regia exist as Au(III) from "white line" characteristics similar to AuCl₃ and HAuCl₄ as standard reagents.

From results of extended X-ray absorption fine structure (EXAFS) analysis (Table 2), Au(III) on the metal adsorbent was predicted to bind to a nitrogen atom (N) with an interatomic distance (R) of 2.02 Å and a coordination number of 1.0 in a form of chloride. Au(III)-Au(III) was also implied to have R of 4.09 Å and a coordination number of 1.0. In addition, a small amount of Au(I) existed in a form of chloride. In Au(I)-hydrogen (H), R was 2.66 Å and a coordination number was 2.0. In Au(I)-Au(I), R was 3.38 Å and a coordination number was 2.0.

**[Table 2]**

| **Sample** | **Atom pair** | **Coordination number** | **Interatomic distance (Å)** |
|---|---|---|---|
| AuCl₃ | Au(III)-Cl | 3.0 | 2.29 |
| | Au(III)-Au(III) | 1.0 | 4.08 |
| HAuCl₄ in aqua regia | Au(III)-N | 1.0 | 2.02 |
| | Au-Cl | 3.0 | 2.29 |
| | Au(I)-H | 2.0 | 2.66 |
| | Au(I)-Au(I) | 2.0 | 3.38 |
| | Au(III)-Au(III) | 1.0 | 4.09 |
| HAuCl₄ in HNO₃ | Au(III)-N | 2.0 | 2.01 |
| | Au-Cl | 2.0 | 2.28 |
| | Au(I)-H | 1.0 | 2.65 |
| | Au(I)-Au(I) | 2.0 | 3.36 |
| | Au(III)-Au(III) | 2.0 | 4.19 |
| HAuCl₄ in H₂SO₄ | Au-Cl | 1.0 | 2.27 |
| | Au(I)-H | 1.0 | 2.62 |
| | Au(0)-Au(0) | 12.0 | 2.85 |
| | Au(I)-Au(I) | 0.8 | 3.34 |
| Au foil | Au(0)-Au(0) | 12.0 | 2.85 |
| Pd(NO₃)₂ in aqua regia | Pd(II)-N | 2.0 | 2.10 |
| | Pd(II)-Cl | 2.0 | 2.32 |
| PdCl₂ | Pd(II)-Cl | 4.0 | 2.31 |
| | Pd(II)-Pd(II) | 2.0 | 3.77 |
| (NH₄)₂PdCl₄ | Pd(II)-Cl | 4.0 | 2.31 |
| | Pd(II)-N | 2.0 | 4.20 |
| | Pd(II)-Pd(II) | 8.0 | 4.27 |

In HNO₃, "white line" shift to higher energy was observed, and an increase in an abundance ratio of Au(I) was shown. An improvement in an adsorption ratio in HNO₃ in comparison to aqua regia (FIG. 1(A)) well corresponds to an increase in the coordination number of Au(III)-N and Au(III)-Au(III) to 2.0. On the other hand, in H₂SO₄, Au(I) and metalic Au (0) which forms a crystal structure in which R between Au and Au is 2.85 Å and a coordination number is 12.0 coexist.

Pd-K edge X-ray absorption near-edge structure (XANES) spectra showed that metal adsorbents treated with Pd(NO₃)₂ dissolved in aqua regia and PdCl₂ dissolved in H₂SO₄ have the same characteristics as in PdCl₂ and (NH₄)₂PdCl₄ which are standard reagents. In addition, the spectra showed that metal adsorbents treated with Pd(NO₃)₂ dissolved in HNO₃ and Pd acetate dissolved in H₂SO₄ have the same characteristics as in PdSO₄ and Pd(OH)₂ which are standard reagents (FIG. 3(B)).

Pd dissolved in aqua regia existed in a divalent cation state, R was 2.32 Å and a coordination number was 2.0 in binding with chlorine atoms (Cl), and R was 2.10 Å and the coordination number was 2.0 in binding with nitrogen atoms (N). Pd(II)-Pd(II) bond was not observed.

Cl-K edge XANES spectra showed a peak of a metal chloride with respect to all metal adsorbents treated with Au or Pd (FIGS. 3(C) and 3(D)). The metal adsorbents before adsorption showed a broad peak having an apex at approximately 2825.1 eV estimated to be derived from a mixture of C-Cl and an inorganic salt such as KCl and CaCl₂. The salt was washed away due to infiltration with aqua regia and only a C-Cl bond remained, and as a result thereof, the vertex was shifted to 2823.4 eV. After adsorption of Au, a new peak indicating binding between Au(III) and Cl was shown at 2820.0 eV. Adsorption of Au in HNO₃ generated a peak at 2823.1 eV specific to binding of Au(I)-Cl in addition to the Au(III)-Cl peak. This tendency became more significant in adsorption of Au in H₂SO₄, and a larger Au(I)-Cl peak was observed. With regard to Pd, a Pd(II)-Cl peak of approximately 2820.5 eV was observed in all tested samples.

S-K edge XANES analysis showed that S(0) of 2473.0 eV and S(VI) of 2481.4 eV are main forms of S in the untreated metal adsorbent (FIGS. 3(E) and (F)). Most of these were shifted to S(IV) of 2480.0 eV after a treatment with aqua regia, and were oxidized to S(VI) after a treatment with H₂SO₄. After a treatment with HNO₃, these exist as a mixture of S(IV) and S in a lower valence state with a peak near 2474.0 eV, and generated a new peak of 2471.0 eV expected to be derived from a Pd(II)-S bond under the presence of Pd. Presence of an Au-S bond was not implied.

### [XPS Analysis of Metal Adsorbent Adsorbing Au and Pd]

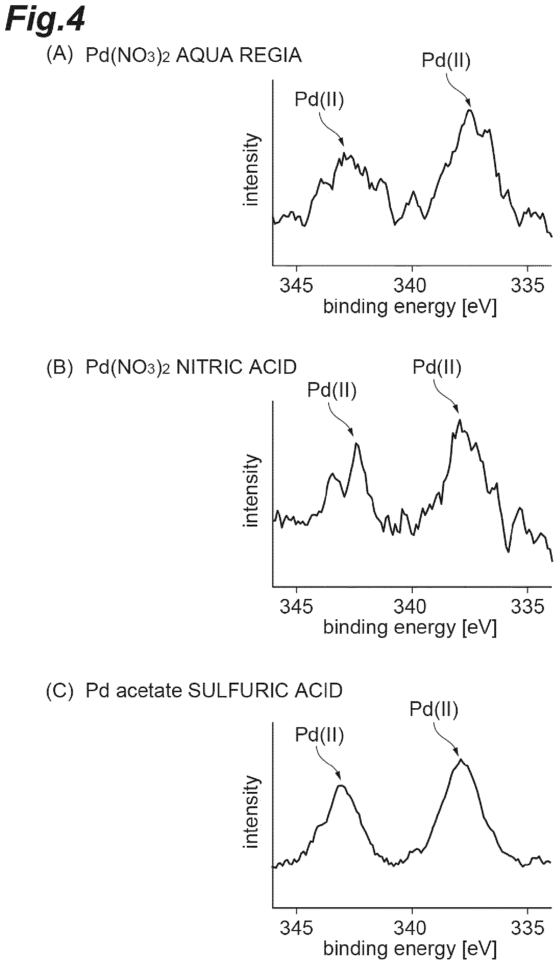

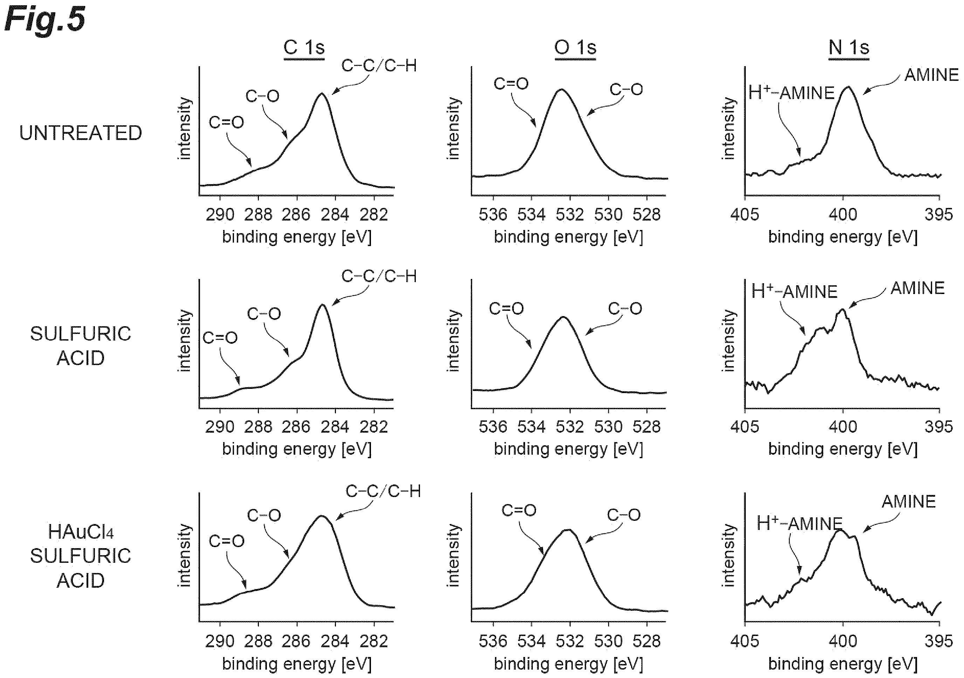

FIG. 4 and FIG. 5 are views showing results of XPS analysis. FIG. 4 shows XPS spectra of Pd 3d of metal adsorbents after metal adsorption from an acid solution obtained by dissolving a Pd salt (Pd(NO₃)₂ or Pd acetate) in aqua regia, nitric acid, or sulfuric acid to be 1 g/L. FIG. 5 shows XPS spectra of C 1s, O 1s, and N 1s of an untreated metal adsorbent, a metal adsorbent infiltrated with 1 M sulfuric acid, and a metal adsorbent after metal adsorption from an acid solution obtained by dissolving an Au salt (HAuCl₄) in sulfuric acid to be 5 g/L.

A peak near 342 to 343 eV and a peak near 337 to 338 eV, which are specific to Pd(II), were shown (FIG. 4) in all the cases tested: Pd(NO₃)₂ in HNO₃, Pd acetate in H₂SO₄, and Pd(NO₃)₂ in aqua regia

From XPS spectra of a metal adsorbent treated with Au dissolved in H₂SO₄ (FIG. 5), it could be seen that a C-O peak increases and a CH/C-C peak decreases after Au adsorption. A protonated amine (H⁺-amine) peak is shifted and increased after impregnation in H₂SO₄, but is decreased to the original level after binding with Au (also Pd).

### <Consideration>

The analysis results of the Au adsorption pattern show that the presence of Cl and a trivalent state of Au are preferable for dissolution of the Au salt in strong acids, but adsorption to metal adsorbents occurs regardless of the form of Au (Table 1). Since adsorption efficiency of Au is highest in H₂SO₄, and sequentially decreases in the order of HNO₃, HCl, and aqua regia (FIG. 1(A)), it was implied that each solvent shows a different adsorption mechanism. Adsorption efficiency of Pd was improved in HNO₃ and H₂SO₄ in comparison to aqua regia (FIG. 1(B)).

It could be seen that Au and Pd recovered by the metal adsorbent consisting of a dried powder of *G*. *sulphuraria* are broadly adsorbed on a surface of the metal adsorbent, and a granular nanoparticle (NP) is frequently generated (FIG. 2). NP contained a higher concentration of Au and Pd in comparison to other positions on the surface of the metal adsorbent, and a distribution pattern of Au and Pd correlates well with a distribution pattern of Cl supplied exogenously.

The property and a binding mechanism of the NP formed on the surface of the metal adsorbent were analyzed by using XAFS and XPS analysis. As a result of plotting a "white line" peak position (eV) from Au-L₃ edge XANES spectra of a standard reagent with respect to a valence, a correlation expression of y = -1.3786x + 11924 (R² = 0.998) was derived. Here, x represents a valence, and y represents a "white line" peak position (eV).

AuCl is known to be partially disproportioned to Au(0) and Au(III) under ambient conditions, and a standard reagent AuCl is predicted to exist as a mixture of the three valences, but a theoretical average valence is always 1. Accordingly, AuCl₃, AuCl, and Au foil were used as standard reagents of Au(III), Au(I), and Au(0), respectively.

According to the correlation expression, with regard to Au, it is predicted that 78.5% of Au(III) and 21.5% of Au(I) exist in aqua regia, 51.4% of Au(III) and 48.6% of Au(I) exist in HNO₃, and 46.3% of Au(I) and 53.7% of Au(0) exist in H₂SO₄ (it is assumed that Au(0) in aqua regia or HNO₃ and Au(III) in H₂SO₄ are 0%).

However, the Cl-K edge XANES spectra clearly shows the Au(III)-Cl peak in H₂SO₄, and indicates presence of a small amount of Au(III) (FIG. 3(C)).

Through Au-L₃ edge EXAFS analysis, it was found that Au(III) is bound to N atoms on the metal adsorbent in a form of chloride. On the other hand, it was predicted that Au(I) in a form of chloride is adsorbed on a surface of the metal adsorbent through a hydrogen bond considering large R of approximately 2.65 Å.

Since R of Au(III)-Cl and R of Au(I)-Cl cannot be distinguished from each other, a coordination number was calculated as a mixture, but it is predicted that Au(III) and Au(I) are bound to three Cl atoms and one Cl atom, respectively.

A coordination number of Au-Cl in aqua regia, HNO₃, and H₂SO₄ decreases from 3.0 to 2.0 and 1.0, and these coordination numbers correspond well to valances of Au expected in respective solvents.

It is considered that reduction of Au is sustainably balanced due to oxidation of S(0) to S(VI) (FIG. 3(E)) or oxidation of C-H/C-C to CO (FIG. 5). In sulfuric acid, it was implied that an acid-base reaction by protons (FIG. 5) may also be involved in Au reduction.

Progressive reduction from Au(III) to Au(0) when a solvent is switched from aqua regia to HNO₃ or H₂SO₄ correlates well with an increase in an adsorption ratio of Au (FIG. 1(A)). This is considered because a binding partner of Au is changed from a nitrogen atom (N) to a hydrogen atom (H), then a cluster is formed by Au-Au bonds, and as a result, a binding site is vacated for a new Au(III) to be adsorbed onto.

As another factor for high adsorption efficiency of Au in H₂SO₄, it is considered that S(VI) on the metal adsorbent increases due to supply of SO₄²⁻ in H₂SO₄ (FIG. 3(E)), and a redox reaction is promoted in a direction of Au reduction. A coordination number of 12.0 in Au(0)-Au(0) in H₂SO₄ implies formation of a face-centered cubic (fcc) crystal specific to a metal Au, and this may be the reason for large NP formation (FIG. 2). An average particle size of the Au NP in H₂SO₄ is 447.6 nm, and is particularly larger than the size of NP formed through biomineralization, which is typically arround 10 to 20 nm.

In contrast, Pd adsorbed on a metal adsorbent remains as Pd(II) in all the solvents tested (FIG. 3(B) and FIG. 4). It could be seen that under Cl-rich conditions where Cl is supplied from a metal salt or a solvent, Pd(II) is bound to two nitrogen atoms (N) on a surface of the metal adsorbent in a form of dichloride. Under Cl-poor conditions, it is considered that Pd(II) is bound to Cl on the metal adsorbent (FIG. 3(D)), and is also bound to S on the metal adsorbent (FIG. 3(F)), or O in the solvent (FIG. 3(B)). The amount of Cl on the surface of the metal adsorbent is limited, but Cl exists in a certain amount (FIG. 3(F)).

Since it is known that Pd(II) in HNO₃ exists as [Pd(NO₃)₄]²⁻, for example, a Pd-O bond may be derived in a form of nitrate, sulfate, hydroxyl, carboxyl, or hydrate, but there is no limitation thereto.

In S-K edge XANES spectra, it was predicted that Pd has a peak position at 2471.0 eV, and thus Pd is bound to S which is not bound to O (FIG. 3(F). A slightly higher adsorption ratio under Cl-poor conditions (FIG. 1(B)) may be caused by two reasons, that is, deficiency of exogeneous Cl-anions which are known competitors for Pd adsorption, and existence of flexible binding forms.

Adsorption specificity of a metal adsorbent with respect to Au and Pd can be explained by that a surface of the metal adsorbent is positively charged, Au and Pd tend to form an anionic complex under acidic conditions, and another base metal is in a cationic form.

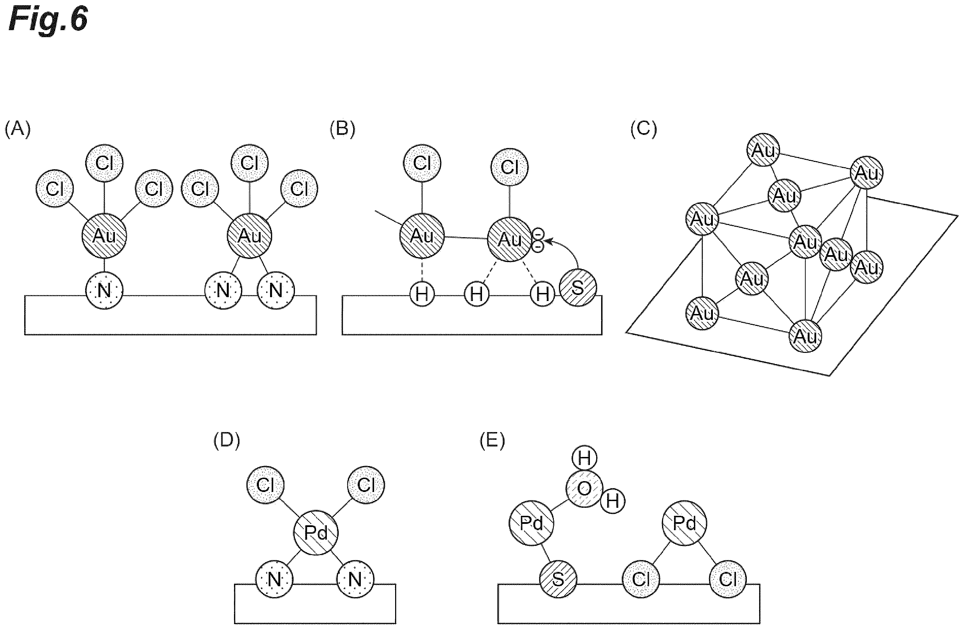

In summary, a schematic view of an adsorption mechanism is illustrated in FIG. 6. FIG. 6 is a schematic view describing an adsorption mechanism of Au and Pd on a metal adsorbent (a dried powder of *G*. *sulphuraria*). FIGS. 6(A), 6(B), and 6(C) illustrate binding mechanism of Au(III), Au(I), and Au(0), respectively. FIGS. 6(D) and 6(E) illustrate binding mechanisms of Pd under Cl-rich conditions and Cl-poor conditions, respectively.

A first adsorption position of AuCl₄⁻ is an N atom on the metal adsorbent. When Au-Cl bonds are broken in the course of reduction to more stable Au(I), Au forms Au-Au bonds, is detached from the N atoms, and instead forms hydrogen bonds. As a consequence, further adsorption of Au(III) is promoted. Reduction of Au is promoted by redox reaction of S and C, and acid-base reaction of protonation/deprotonation of amine. The metal Au reduced to Au(0) is strongly adsorbed on the metal adsorbent, and forms large particles having a fcc structure (FIGS. 6(A) to 6(C)). The progressive reduction of Au is the key to improving adsorption efficiency.

On the other hand, Pd(II) is not reduced on the metal adsorbent. This explains the reason why a difference in adsorption efficiency between solvents is relatively small. Under Cl-rich conditions, Pd is mainly bound to N atoms on the metal adsorbent, and under Cl-poor conditions, Pd shows binding with Cl, S, and O (FIGS. 6(D) and 6(E)).

## Claims

1. A method for recovering at least one kind of metal selected from the group consisting of gold (Au) and palladium (Pd), the method comprising:
an addition process of adding a metal adsorbent to a solution containing the metal; and
an adsorption process of causing the metal to be adsorbed on the metal adsorbent,
wherein the metal adsorbent comprises at least one selected from the group consisting of a cell and a cell-derived article of microorganism belonging to Cyanidiales, a processed article of the cell and the cell-derived article, and an artificial substance mitigating the cell, the cell-derived article, and the processed article, and
wherein the solution is a nitric acid solution or a sulfuric acid solution.

2. The method according to claim 1, wherein the processed article is a dried article, a pulverized article, and a dried powder of the cell and the cell-derived article of microorganism belonging to Cyanidiales.
